# EUROPEAN PATENT APPLICATION

(11) **EP 1 230 959 A1**
(43) Date of publication of application: **14.08.2002**
(21) Application number: 01301279.4
(22) Date of filing: 13.02.2001
(51) Int. Cl.: A63F 13/10

(54) **Video simulation method and program**

(71) Applicant: Pumpkin Pie Net Limited, Burley, Hampshire BH24 4HP (GB)
(72) Inventor: Townsend, Peter George, Burley, Hampshire BH24 4HP (GB)
(74) Representative: Cross, James Peter Archibald

(57) **Abstract**

In a method of providing a video simulation on a computer, parameter selection options (S1-S8) and possible parameter values (I1-I6; F1-F9) are displayed, and are selectable by the user. The outcome of the simulation is determined according to the combination of parameters selected by the user and additionally according to a random or pseudo-random determination. A video clip (V) corresponding to the outcome is selected and displayed.

## Description

The present invention relates to a method, apparatus and a computer program for implementing a simulation game using video clips.

Laserdisc video games have been known at least since 1982, with the launch of 'Astron Belt' by Sega and 'Dragons Lair' by Cinematronics. The laser discs stored video clips corresponding to possible events, for example in a graphical adventure. The events were selected according to inputs by the user, such as pressing buttons or manipulating joysticks. In general, these systems used animated video clips, but later versions launched in the early 1990s (e.g. 'Mad Dog Macree' by American Laser Games) used live video clips, sometimes in combination with computer-rendered graphics. However, such games have since fallen out of favour, because the number of video clips which can feasibly be produced and stored is limited, and players therefore quickly tire of them.

Hence, at least for simulation games such as golf, fishing and adventure games, video clips have been almost completely superseded by fully computer-rendered graphics. The only exception is the non-interactive video sequences which often intersperse computer-rendered interactive sessions in a game.

Even on high-end personal computers and consoles which are now available, computer-rendered graphics cannot approach the realism of pre-recorded video sequences. Such realism is particularly desirable in simulation games such as golf or fishing games, which aim to simulate famous courses or locations. Hence, there is a need to combine the realism of laserdisc games with the interactivity of computer-rendered games.

The document US 5434678 discloses a video system for selective retrieval of non-sequentially stored video sequences, to display a version of a video program edited according to a user's preferences.

According to the present invention, there is provided a method of providing a simulation on a computer, in which parameter selection options and possible parameter values are displayed, and are selectable by the user. The outcome of the simulation is determined according to the combination of parameters selected by the user and additionally according to a random or pseudo-random determination. A video clip corresponding to the outcome is selected and displayed.

A specific embodiment of the present invention will now be described with reference to the accompanying drawings, in which:
Figure 1 is a schematic diagram of a computer for running a game according to the embodiment;
Figures 2 to 6 are flowcharts of the operation of the game; and
Figures 6 to 13 are sequential screenshots showing the progress of a sample game.

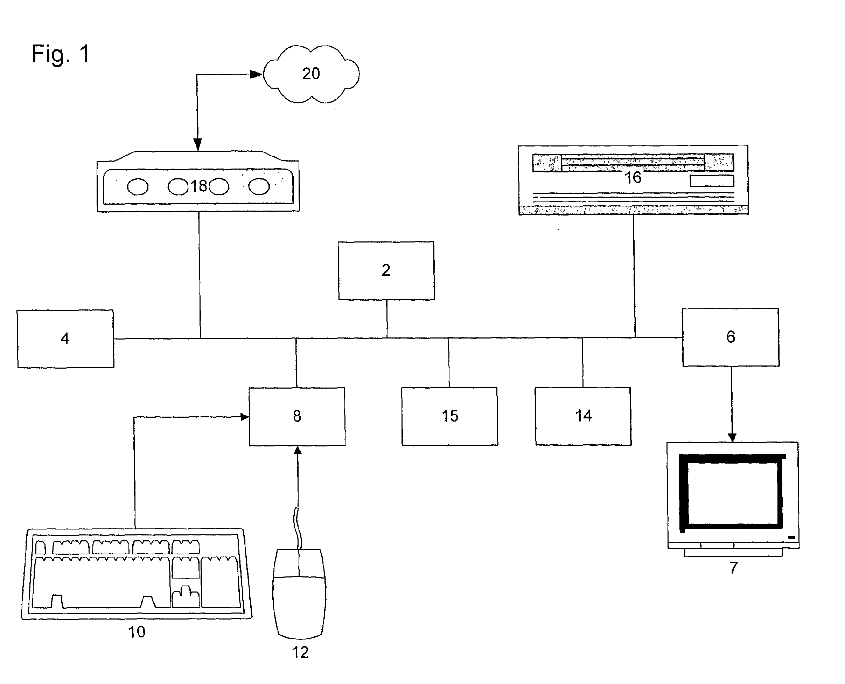

As shown in Figure 1, a computer for running the game consists of a CPU 2 connected via a bus to memory 4, including at least EPROM and RAM, a graphics interface 6, including a graphics processor connected to a monitor 7, an I/O interface 8 connected to a keyboard 10 and mouse 12, an audio interface 14 including an audio processor, a hard disc drive 15, a removable disc drive 16, and a network interface 18 for connection to a network 20. In one specific embodiment, the computer is a PC-compatible computer where the removable disc drive 16 is a DVD drive and the network interface 18 is a broadband interface such as an ADSL modem. This and other types of computers or games consoles are well-known and do not need to be described further, save that the computer should be able to handle and display, substantially in real time, video data stored on the removable disc drive 16 and/or the hard disc drive 15, and/or accessed over the network interface 18.

The game according to the embodiment is a fly fishing simulation involving a computer program and a set of randomly accessible video clips of various actions involved in fly fishing, such as casting, striking, playing a fish, landing a fish or losing a fish. Each of these actions is recorded at a plurality of beat locations and at a plurality of times of year for each location. Additionally, each action may be recorded with different types, such as casting upstream or downstream, or with different equipment, such as different rod lengths, or from different positions, such as wading or on a riverbank. The recorded video clips are indexed and copied onto a removable medium of sufficient capacity, such as a DVD-ROM together with the index. The computer program may also be stored on the DVD-ROM, or loaded onto the computer from some other medium.

The computer program consists essentially of a parameter selection stage, in which various parameters are selected for the simulation, and a simulation stage in which a sequence of video clips is selected and displayed according to the various selected parameters and according to actions performed by the user during the simulation.

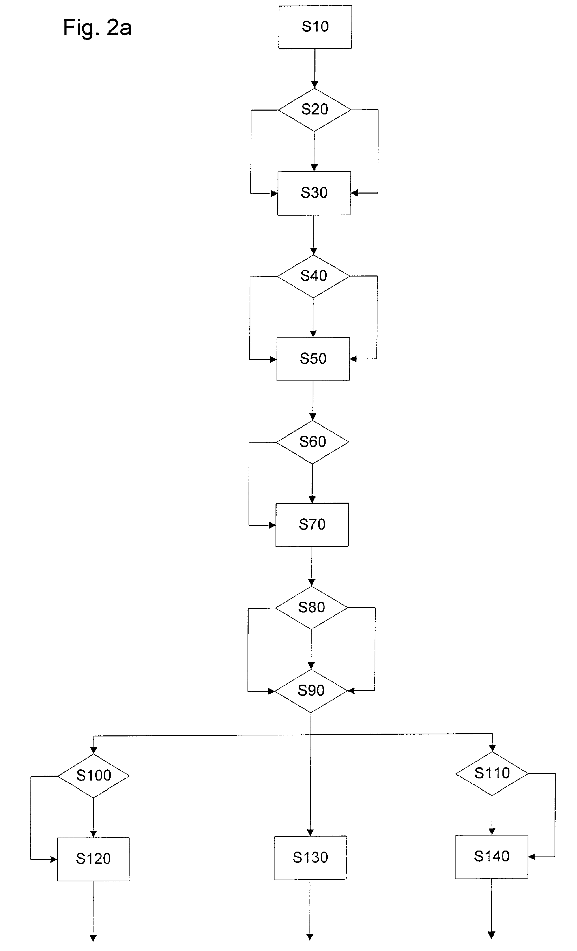

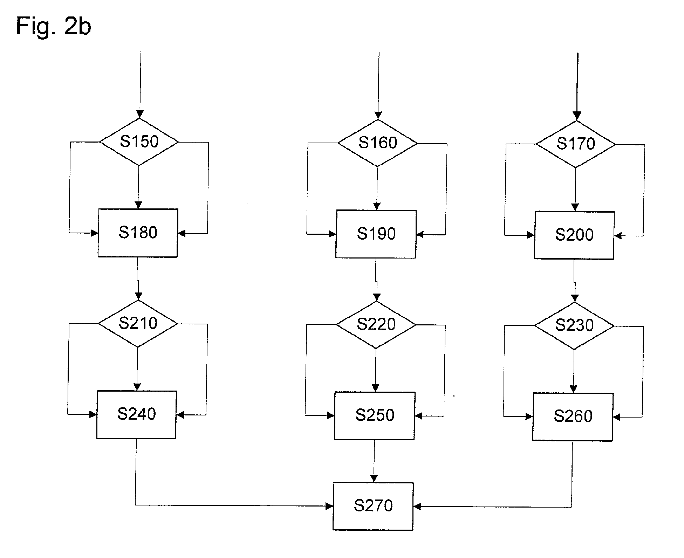

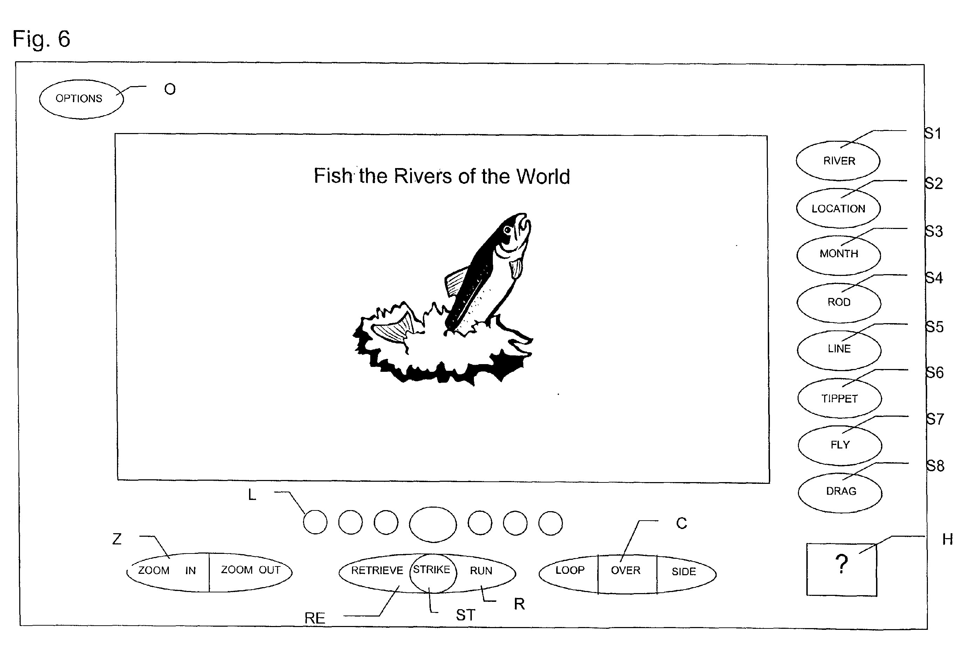

The parameter selection stage is represented by the flowchart of Figure 2, while Figure 6 shows a display window at the beginning of the selection stage. Selection buttons S to S8 are used to select values for different parameters, in this case the river, the location, the month, the rod length, the line type, the tippet length and weight, the type of fly, and the drag weight. A help button H may be used to select a help function. A zoom button Z controls a video clip zoom function.

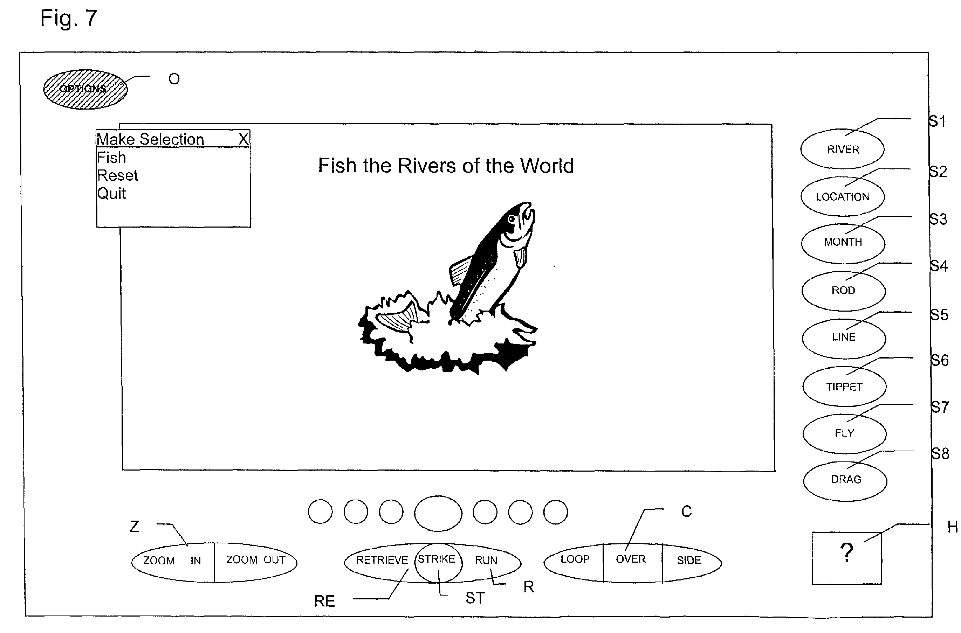

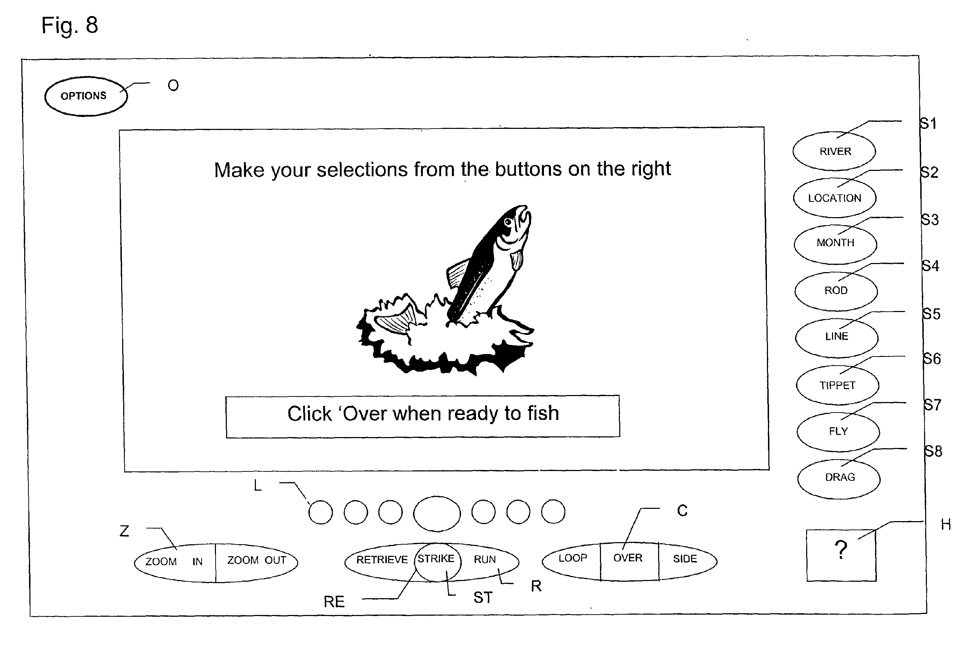

As shown in Figure 7, the user clicks an 'options' button O and selects either 'fish', 'reset' or 'quit'. If 'fish' is selected, the program proceeds as described below and the display window displays a message to select parameters from the selection buttons S1 to S8, as shown in Figure 8.

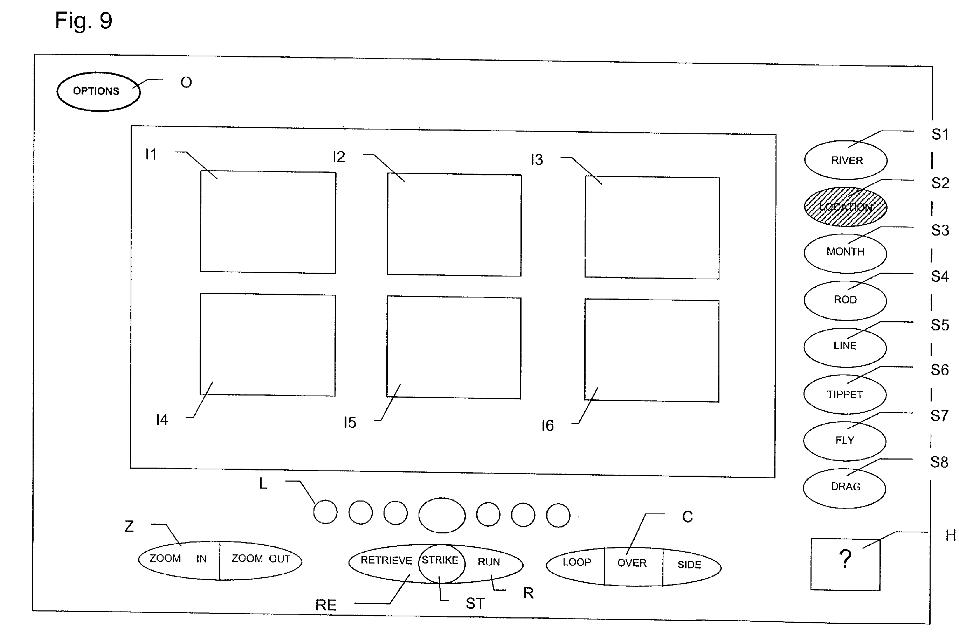

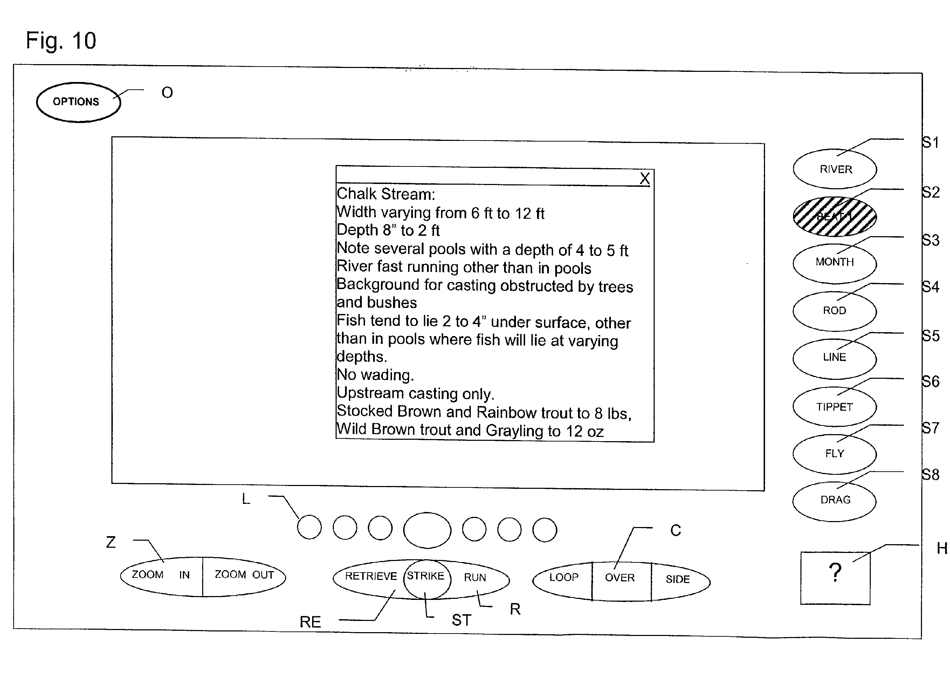

At step S10, the user selects an angler skill option, and at step S20 selects the skill level, either novice, amateur or professional. This selection affects the possible selection of other parameters, as will be described later. In all three cases the user then selects a river option, by clicking the selection button S1, and a location option at step S30, by clicking the selection button S2. A display window as shown in Figure 9 is then displayed, showing small images I1 to I6 of the possible locations on the selected river. The user then selects one of these locations by clicking on the desired image I. In the case shown in Figure 10, the user has selected beat number 1 on the selected river; information on the selected location are displayed, in this case:
Chalk Stream:
   Width varying from 6 ft to 12 ft
   Depth 8" to 2 ft
   Note several pools with a depth of 4 to 5 ft
   River fast running other than in pools
   Background for casting obstructed by trees and bushes
   Fish tend to lie 2 to 4" under surface, other than in pools where fish will lie at varying depths.
   No wading.
   Upstream casting only.
   Stocked Brown and Rainbow trout to 8 lbs, Wild
   Brown trout and Grayling to 12 oz.

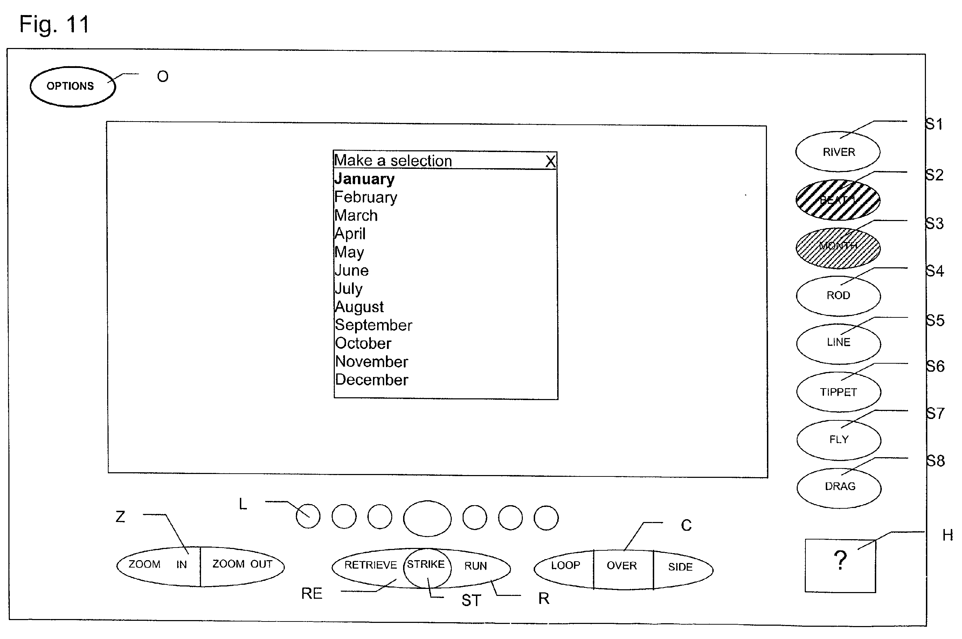

The user may also select a specific month, as shown in Figure 11.

For each location, there is a type which is identified at step S40: river, chalk stream or lake. At step S50, the user selects a 'gillie assistance' option and at step S60 selects whether this option is enabled; 'gillie assistance' ensures that only those values of parameters suitable for the selected location are presented for selection.

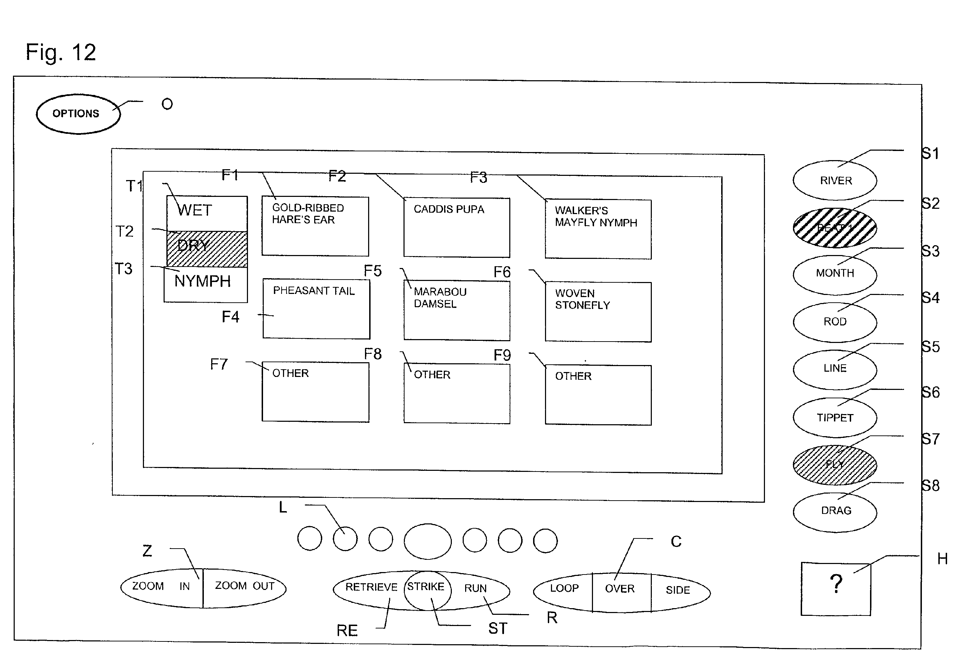

At step S70, the user selects a 'rod selection' option, for example by clicking the rod selection button S4. At step S80, three possible rod lengths of 8 ft, 9 ft 6 in and 11 ft 3 in are presented and the user selects one of these. At step S90, the user selects a 'fly selection' option, for example by clicking on the fly selection button S7. As shown in Figure 12, fly buttons F1 to F9 are then displayed, each with a description and/or picture of the relevant fly, and the user selects a fly by clicking on the corresponding button. The type of fly displayed, such as wet, dry or nymph, is varied by the user clicking on fly type buttons T1, T2 or T3.

The type of fly selected then determines the types of line which can be presented for selection. At step S100, a wet fly has been selected and the user may select between floating and sinking lines. The user then selects a tippet at step S120. At step S130, the user has selected a dry fly, for which only a floating line is suitable, so the user then proceeds directly to tippet selection. At step S110, the user has selected a nymph and floating or sinking lines may be selected; the user then proceeds to tippet selection at step S140. At each of steps S150, S160 and S170, the user is able to select between 2-4 lb, 6 lb or 8 lb tippets. At step S180 the user is presented with a choice of different wet flies and selects one at step 210; at step S190 the user is presented with a choice of different dry flies and selects one at step S220; while at step S200 the user is presented with a choice of different nymphs and selects one at step S230. Respectively at steps S240, S50 and S260 the user clicks a button to begin a fishing scenario based on the selections, and at step S270 the selected fishing scenario begins.

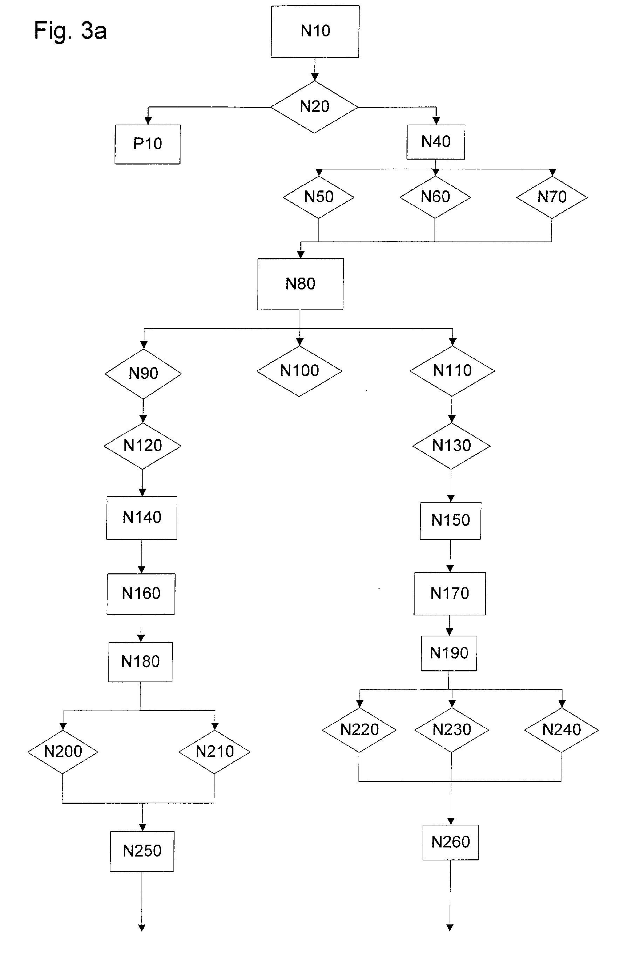

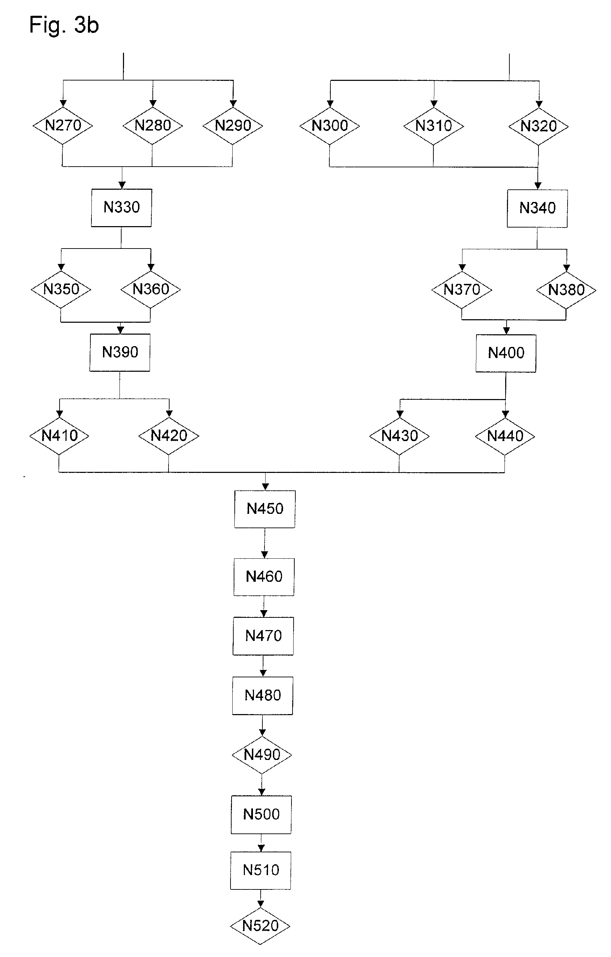

The availability of selections according to the angler skill level will now be illustrated with reference to Figures 3 to 5.

### Novice Level

Figures 3a and 3b are a flowchart of the selections available when the 'novice' skill level is selected, at step N10. At step N20, the user selects whether to use gillie assistance; if not selected, the user proceeds to the professional selection start P10. If selected, the user is then selects the month option at step N40, and selects from 'April' (N50), 'May' (N60), or 'June' (N70). At step N80 the user selects the 'location' option and is able to select from 'river' (N90), 'chalk stream' (N100) and 'lake' (N110). For reasons of space, the 'chalk stream' path is not traced further. The user then selects a beat at steps N120 or N130 and proceeds to rod selection at steps N140 and N150. At step N160, only a 9 ft 6 in rod is available for a river location, while at step N170 only an 11 ft 3 in rod is available for a lake location. At steps N180 and N190 respectively, the user selects a fly type; for the river option, dry fly (N200) or wet fly (N210) are available. while for the lake option, dry fly (N220), wet fly (N230) or nymph (N240) is available. The user then proceeds to the line selection option (N250; N260).

For the river option, the user selects between 'floating line, dry fly' (N270), 'floating line, wet fly' (N280) and 'sinking line, wet fly' (N290); for the lake option, the user selects between 'floating line, nymph' (N300), 'sinking line, nymph' (N310) and 'sinking line, wet fly' (N320). In either case, the user then proceeds to tippet selection (N330; N340), and selects between '6 ft x 2 lb' (N350; N370) and '6ft x 4 lb' (N360; N380). The user then proceeds to fly selection (N390; N400). For the river option, the user selects between a number of dry flies (N410) or wet flies (N420), while for the lake option the user selects between a number of nymphs (N430) and wet flies (N440).

In either case, the user then selects a reel drag option (N450) and chooses between '0' and '2' (N460). The user then begins the fishing scenario (N470). As will be described in more detail below, the user clicks on the 'cast' button C and then on the 'strike' button (N480) between 1 and 4 seconds (N490) after a bite is indicated. At this stage, gillie assistance ends (N500). The user then 'plays' the fish (N510) by clicking on the 'run' button R and 'retrieve' button RE for a period of up to 15 minutes (N520), after which the fish is either caught or lost.

### Amateur Level

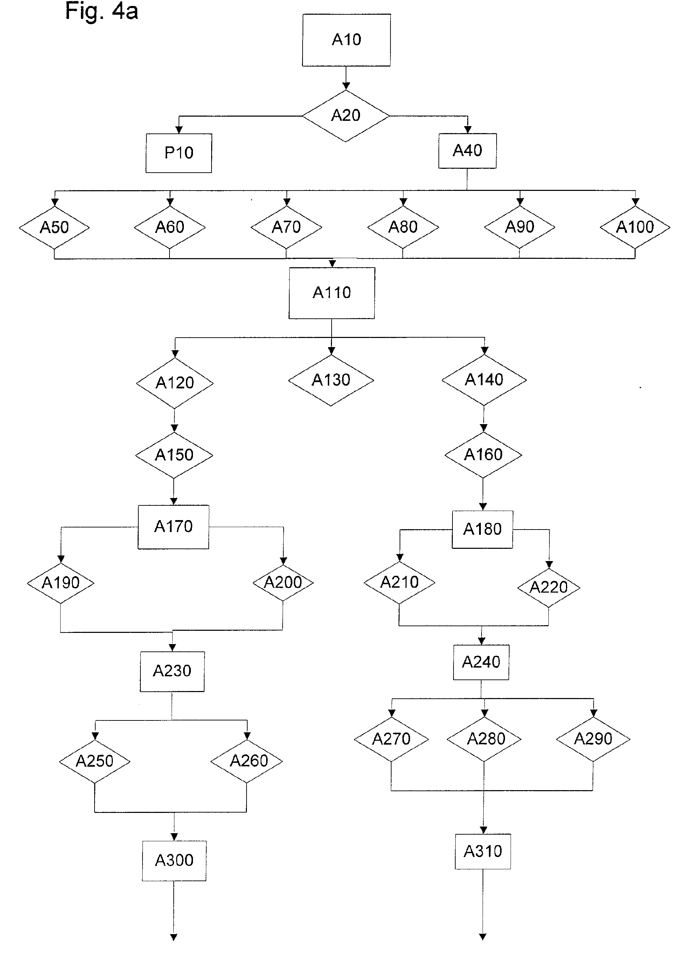

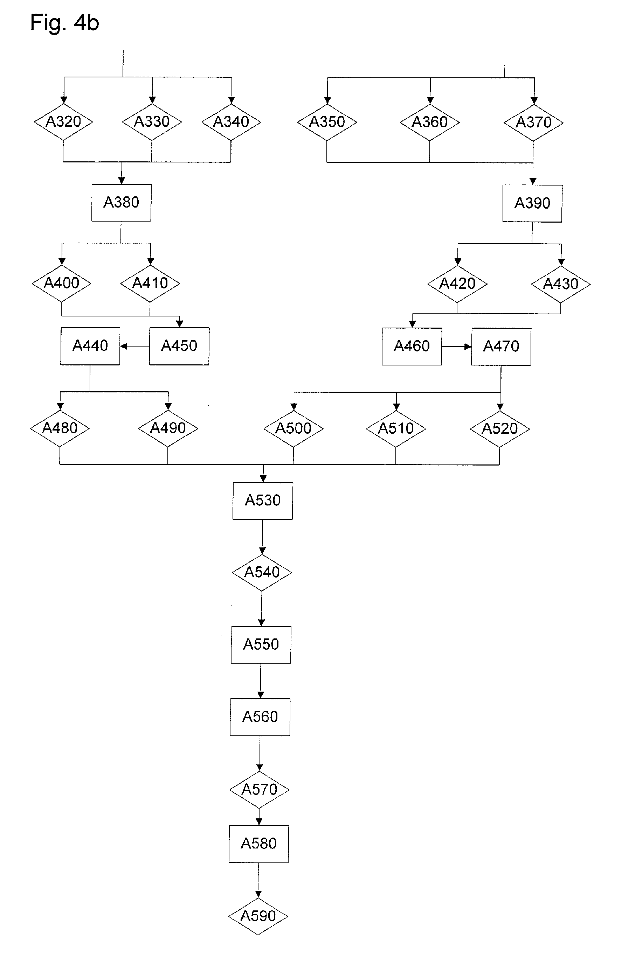

Figures 4a and 4b are a flowchart of the selections available when the 'amateur' skill level is selected, at step A10. At step A20, the user selects whether to use gillie assistance; if not selected, the user proceeds to the professional selection start P10. If selected, the user is then selects the month option at step A40, and selects from 'April' (A50), 'May' (A60), 'June' (A70), 'July' (A80), 'August' (A90) and 'September' (A100). At step A110 the user selects the 'location' option and is able to select from 'river' (A120), 'chalk stream' (A130) and 'lake' (A140). For reasons of space, the 'chalk stream' path is not traced further. The user then selects a beat at steps A150 or A160 and proceeds to rod selection at steps A170 and A180. For the river option the user may select from 9ft 6in (A190) and 8ft (A200), while for the lake option, the user may select from 9ft 6in (A210) and 11ft 3in (A220). At steps A230 and A240 respectively, the user selects a fly type; for the river option, dry fly (A250) or wet fly (A260) are available, while for the lake option, dry fly (A270), wet fly (A280) or nymph (A290) is available. The user then proceeds to the line selection option (A300; A310).

For the river option, the user selects between 'floating line, dry fly' (A320), 'floating line, wet fly' (A330) and 'sinking line, wet fly' (A340); for the lake option, the user selects between 'floating line, nymph' (A350), 'sinking line, nymph' (A360) and 'sinking line, wet fly' (A370). In either case, the user then proceeds to tippet selection (N380; N390), and selects between '6 ft x 2 lb' (A400; A420) and '6ft x 4 lb' (A410; A430). At this stage, gillie assistance ends (A450; A460) so that no assistance is provided in the selection of any further parameters.

The user then proceeds to fly selection (A440; A470). For the river option, the user selects between a number of dry flies (A480) or wet flies (A490), while for the lake option the user selects between a number of nymphs (A500), wet flies (A510) and dry flies (A520).

In either case, the user then selects a reel drag option (A530) and chooses between '0' and '2' (A540). The user then begins the fishing scenario (A550). As will be described in more detail below, the user clicks on the 'cast' button C and then on the 'strike' button (A560) between 1 and 4 seconds (A570) after a bite is indicated. The user then 'plays' the fish (A580) by clicking on the 'run' button R and 'retrieve' button RE for a period of up to 15 minutes (A590), after which the fish is either caught or lost.

### Professional

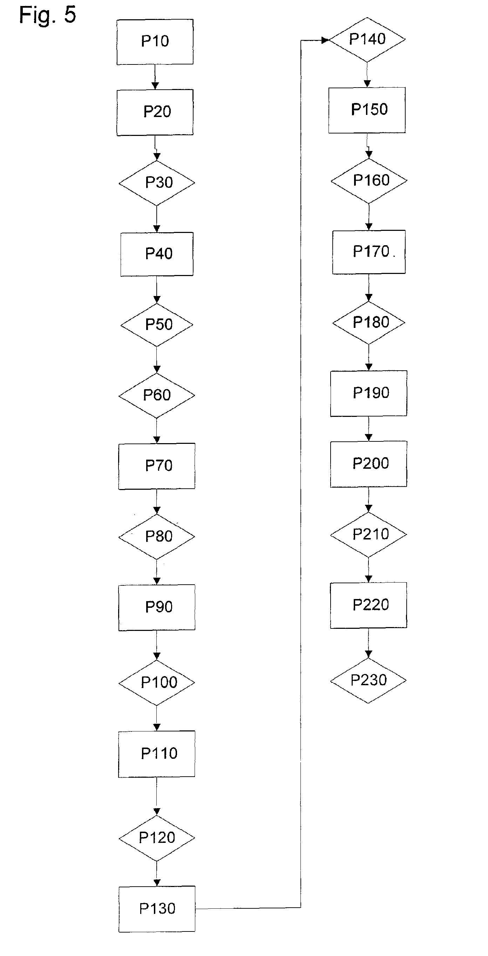

Figure 5 is a flowchart of the selections available when the 'professional' skill level is selected, at step P10. At step P20, the month selection option is selected and at step P30, any month can be selected. At step P40, the location selection option is selected and at step P50, any location of those available may be selected, while at step P60 any beat may be selected. At step P70, the rod selection option is selected and at step P80, any of the available rods may be selected. At step P90, the fishing method selection option is selected and at step P100, any of the available methods may be selected. At step P110, the line selection option is selected and at step P120, any of the available lines may be selected. At step P130, the tippet selection option is selected and at step P140, any of the available tippets may be selected. At step P150 the fly selection option is selected and at step P160, any of the available flies may be selected. At step P170, the reel drag selection option is selected and at step P180, and of the reel drag options may be selected, from 0 to 6.

The user then begins the fishing scenario (P190). As will be described in more detail below, the user clicks on the 'cast' button C and then on the 'strike' button (P200) between 1 and 4 seconds (P210) after a bite is indicated. The user then 'plays' the fish (P220) by clicking on the 'run' button R and 'retrieve' button RE for a period of up to 15 minutes (P230), after which the fish is either caught or lost.

### Simulation Stage

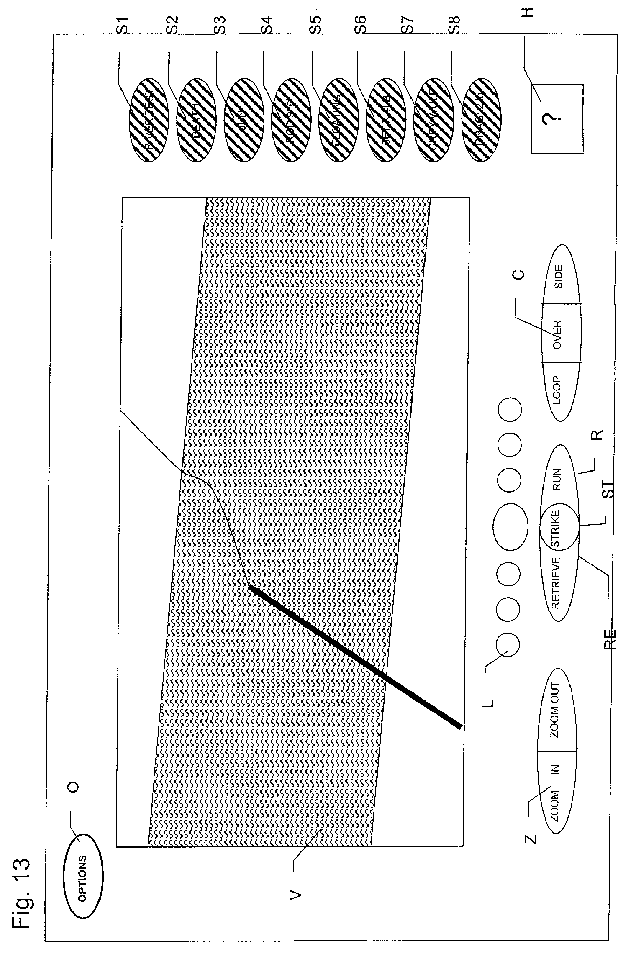

Once all of the parameters have been selected, the user clicks on the 'cast' button C to begin the simulation stage. An introductory video clip is selected for display according to the location and beat selected. When the introductory video clip has finished, the user casts by clicking on the 'loop', 'over' or 'side' sections of the cast button C, according to the type of cast required. A casting video clip V is then selected for display according to the beat and casting type selected, as shown schematically in Figure 13.

The program determines whether it is possible to catch a fish with the selected combination of parameters by combining factors determined from a look-up table, as shown below in Table 1:

| | | | | | |
|---|---|---|---|---|---|
| **Parameters** | **Factor** | Use Gillie YES | f37 | Floating line wet fly | f70 |
| **Months** | | Use Gillie NO | f38 | Floating line Nymph | f71 |
| April AM | f1 | | | Sinking line dry fly | f72 |
| April PM | f2 | Novice | f39 | Sinking line wet fly | f73 |
| May AM | f3 | Amateur | f40 | Sinking line Nymph | f74 |
| May PM | f4 | Professional | f41 | | |
| June AM | f5 | | | **Tippet Selection** | |
| June PM | f6 | **Rod Selection** | | 6ff * 2 lb | f75 |
| July AM | f7 | 8ft on River | f42 | 6ft * 4 lb | f76 |
| July PM | f8 | 9ft 6" on River | f43 | 6ft * 6 lb | f77 |
| August AM | f9 | 11ft 3" on river | f44 | 6ft * 8 lb | f78 |
| August PM | f10 | 8ft on Chalk Stream | f45 | 9ft * 2 lb | f79 |
| September AM | f11 | 9ft 6" on chalk stream | f46 | 9ft * 4 lb | f80 |
| September PM | f12 | 11ft 3" on chalk stream 8ft on lake | f47 f48 | 9ft * 6 lb 9ft * 8 lb | f81 f82 |
| **Rating** | | 9ft 6" on lake | f49 | | |
| Novice | f13 | 11ft 3" on lake | f50 | **Select Fly** | |
| Amateur | f14 | | | Dry Fly 1-24 | f83 |
| Professional | f15 | **Fishing method** Dry fly on chalk stream | | Wet fly 1-24 Nymph 1-24 | f84 f85 |
| **Locations** | | AM | f51 | | |
| River AM | f16 | Dry fly on chalk stream PM | f52 | **Set reel drag** | |
| River PM Beat 1X | f17 f18 | Dry fly on river AM | f53 | 0 + 10 2+5 | f86 f87 |
| Beat 2X Beat 3X | f19 f20 | Dry fly on river PM Dry fly on lake AM | f54 f55 | 4 to 0 6 to 5 | f88 f89 |
| Beat 4X Beat 4X | f21 f21 | Dry fly on lake PM Wet fly on chalk stream | f56 | | |
| Beat 5X | f22 | AM | f57 | | |
| Chalk Stream AM | f23 | Wet fly on chalk stream | | | |
| Chalk Stream PM | f24 | PM | f58 | | |
| Beat 6X | f25 | Wet fly on river AM | f59 | | |
| Beat 7X | f26 | Wet fly on river PM | f60 | | |
| Beat 8X | f27 | Wet fly on lake AM | f61 | | |
| Beat 9X | f28 | Wet fly on lake PM | f62 | | |
| Beat 10X | f29 | Nymph fly on chalk | | | |
| Lake AM | f30 | stream AM | f63 | | |
| Lake PM | f31 | Nymph fly on chalk stream PM | f64 | | |
| Willows | f32 | Nymph fly on river AM | f65 | | |
| Bay | f33 | Nymph fly on river PM | f66 | | |
| Inlet | f34 | Nymph fly on lake AM | f67 | | |
| Outlet | f35 | Nymph fly on lake PM | f68 | | |
| Deeps | f36 | **Line Selection** | | | |
| **Gillie Assistance** | | Floating line dry fly | f69 | | |

In one example, some of the factors are positive and some are negative; the relevant factors are added and it is only possible to catch a fish if the total is positive. Other combinations of factors and criteria may be used.

If it is possible to catch a fish, the program then makes a random or pseudo-random determination of whether a bite is achieved on the current cast. If a bite is achieved, this is indicated by illuminating the strike button ST. The user must then strike within a predetermined period, such as between 2 and 3 seconds after the bite, otherwise the fish is lost.

After the strike, the user must then 'play' the fish by clicking on the 'retrieve' button RE or the 'run' button R. When the fish is being played correctly, the central one of the lights L lights up green. Otherwise, the smaller lights light up red progressively to one side or the other of the central light L. If the lights begin to light up to the right, the user must click on the retrieve button RE to extinguish the red lights until the central light lights up once more. If the lights begin to light up to the left, the user must click on the run button R to extinguish the red lights until the central light lights up once more. If the outermost one or two lights L have been lit up for a cumulative total which exceeds a predetermined value, such as two seconds, the fish is lost.

While the fish is played, a video clip V showing a fish being played is displayed. While any video clip V is displayed, the user may click on the 'zoom in' and 'zoom out' parts of the zoom button to effect a video zoom function. If the fish has not been 'played' for at least 1½ to 2 minutes, the fish is lost. The fish may be caught by clicking on the retrieve button RE while correcting with the run button R if the smaller lights begin to light up to the left of the central light L. If the fish is caught, a new video clip is selected and displayed, showing a fish being netted and landed at the appropriate beat, and a message displaying the type of fish is displayed. If the fish is lost, a message 'fish lost' is displayed.

After a fish is caught or lost, the program returns to the parameter selection mode to allow the parameters to be changed. Additional options may be selected by clicking on the 'options' button O. These options include 'dress fly', which must be performed on each occasion after a fish is lost or caught, otherwise no fish can be caught.

If a bite is not achieved, the video clip V of the casting ends, a message is displayed, and the user may cast again, or change any of the parameters. Additional options may be selected by clicking on the 'options' button O, including 'Add floatent to fly'; this must be performed after six unsuccessful casts, otherwise fish cannot be caught.

At the end of a game session, statistics are displayed, such as the number and type of fish caught, percentage of successful casts and so on.

Although one embodiment has been described in terms of fly-fishing, it will be understood that other sports or activities may be simulated in a similar way. Preferably, the activities should be such that can be represented from a first person perspective that does not vary while an action is performed. For example, the present invention can also be applied to a golf simulation, but it is less suitable for a football simulation, in which the position and orientation of the player must change constantly and it is not feasible to store a video clip for each possible movement.

In one preferred embodiment, the video clips are stored on a DVD, but alternatively a high-bandwidth Internet or cable connection may be used to retrieve the required video clip.

## Claims

1. A method of performing a video simulation on a computer having user input means (10, 12), processing means (2), display means (7) and selective video clip retrieval means (16, 18), comprising:
a. displaying on said display means a plurality of parameter options (S1-S8);
b. receiving via said user input means a selection of one of said parameter options (S1-S8);
c. displaying in response to the selection of one of said parameter options a set of parameter values (I1-I6; F1-F9);
d. receiving via said user input means (10; 12) a selection of one of said set of parameter values (I1-I6; F1-F9);
e. selecting, on the basis of at least said selected parameter value and on a random or pseudo-random determination, a video clip (V) via said video retrieval means (16; 18); and
f. displaying said video clip (V) on said display means (7).

2. A method according to claim 1, wherein steps a to d are performed for more than one of said plurality of parameter options (S1-S8).

3. A method according to claim 1, wherein steps a to d are performed for each of said plurality of parameter options (S1-S8).

4. A method according to claim 2 or claim 3, including calculating a factor dependent on each of said selected parameter values (I1-I6; F1-F9), wherein said video clip (V) is selected on the basis of said factor.

5. A method according to claim 4, wherein said factor is dependent on specific combinations of said selected parameter values (I1-I6; F1-F9).

6. A method according to any preceding claim, wherein the set of parameter values for one of said parameter options is selected from a superset of possible parameter values, dependent on the selection of a parameter value of another one of said parameter options.

7. A method according to any preceding claim, including displaying a preceding video clip (V) on said display means (7) before step f, wherein said video clip (V) is further selected on the basis of user input actuations during said preceding video clip (V).

8. A method according to claim 7, including displaying variable indicia (L) on said display means in combination with said preceding video clip (V).

9. A method of performing a video simulation on a computer having user input means (10, 12), processing means (2), display means (7) and selective video clip retrieval means (16, 18), comprising:
a. retrieving and displaying a first video clip (V);
b. during the display of the first video clip (V), displaying an indicium (L); and
c. in response to a user actuation via the user input means (10, 12), ceasing the display of the indicium (L);
d. wherein a second video clip (V) is selected for display after the first video clip (V) according to the duration for which said indicium (L) is displayed.

10. A computer program arranged to perform the method according to any preceding claim.

11. A carrier bearing a computer program according to claim 10.

12. A carrier according to claim 11, additionally bearing a plurality of video clips (V) from which said video clip (V) and/or said preceding video clip (V) may be selected.
